# FASCICULE DE BREVET EUROPEEN

(11) **EP 1 299 231 B1**
(45) Date de publication et mention de la délivrance du brevet: **28.04.2004**
(21) Numéro de dépôt: 01949586.0
(22) Date de dépôt: 29.06.2001
(51) Int. Cl.: B32B 3/30, B32B 21/10, B65D 6/18, B29C 59/00, B29C 53/06

(54) **PLAQUE PREDECOUPEE, PERMETTANT D'OBTENIR UN VOLUME, NOTAMMENT UN EMBALLAGE, PROCEDE DE FABRICATION D'UNE TELLE PLAQUE, ET EMBALLAGE AINSI OBTENU**
VORGESCHNITTENENE PLATTE ZUM BILDEN EINER UMFASSUNG, INSBESONDERE EINER VERPACKUNG, VERFAHREN ZUR HERSTELLUNG EINER SOLCHEN PLATTE SOWIE EINE DARAUS ERHÄLTLICHE VERPACKUNG
PRECUT PLATE FOR OBTAINING A VOLUME, IN PARTICULAR A PACKAGE, METHOD FOR MAKING SAME AND RESULTING PACKAGE

(30) Priorité: 29.06.2000 FR 0008381
(43) Date de publication de la demande: 09.04.2003
(73) Titulaire: P.W.F. GROUP, 31300 Toulouse (FR)
(72) Inventeur: Noilhan, Roland, 31000 Toulouse (FR)
(74) Mandataire: Morelle, Guy Georges Alain
(86) Numéro de dépôt international: PCT/FR2001/002089
(87) Numéro de publication internationale: WO 2002/000424

(56) Documents cités:
- EP-A- 0 187 119
- EP-A- 0 641 905
- EP-A- 0 893 243
- FR-A- 2 779 089
- GB-A- 1 583 324
- US-A- 1 881 734
- DATABASE WPI Section Ch, Week 199616 Derwent Publications Ltd., London, GB; Class A32, AN 1996-156075 XP002184286 & JP 08 039690 A (OGURI MOKKO KK), 13 février 1996 (1996-02-13)
- PATENT ABSTRACTS OF JAPAN vol. 014, no. 113 (M-0944), 2 mars 1990 (1990-03-02) & JP 01 314139 A (SHIN ETSU POLYMER CO LTD), 19 décembre 1989 (1989-12-19)
- DATABASE WPI Section Ch, Week 198949 Derwent Publications Ltd., London, GB; Class A14, AN 1989-361083 XP002184287 & JP 01 271219 A (SHINETSU POLYMER CO), 30 octobre 1989 (1989-10-30)

## Description

La présente invention concerne les plaques prédécoupées pour définir des ensembles de parties de plaques, lesdites plaques étant aptes à prendre au moins deux première et seconde formes, la première forme dite "à plat" dans laquelle les plaques se trouvent sensiblement dans un plan et la seconde forme dite "pliée" obtenue après pliage autour de moyens de charnière des parties de plaques les unes par rapport aux autres pour définir un volume creux, par exemple tout ou partie d'un emballage de produits, tout ou partie d'un tiroir de meuble, etc.

Plus particulièrement, en ce qui concerne les emballages de type cageot ou analogue, on connaît les problèmes notamment posés par le transport des fruits, légumes, etc. entre le lieu de leur production et le lieu de leur distribution au client final potentiel.

En effet, la fragilité de ces produits oblige à les transporter de façon qu'ils s'abîment ou s'écrasent le moins possible les uns au contact des autres. Dans ces conditions, les emballages destinés à les contenir pour leur transport sont de relativement faible volume et, étant donné les très grandes quantités de fruits, légumes, etc. qui sont consommés journellement, un nombre considérable de ces emballages est nécessaire.

La gestion de ces emballages pose d'énormes problèmes, notamment leur transport sur les lieux de production et leur destination après que les produits ont été distribués. Aussi, pour réduire le volume de ces emballages lorsqu'ils sont vides, ont-ils été réalisés à partir de plaques prédécoupées pour définir des ensembles de parties de plaques qui sont aptes à prendre au moins deux première et seconde formes, la première forme dite "à plat" dans laquelle les plaques se trouvent sensiblement dans un plan et la seconde forme dite "pliée" obtenue après pliage autour de moyens de charnière des parties de plaques les unes par rapport aux autres pour définir des emballages du type cageots ou analogues.

De cette façon, les emballages sont amenés sous leur forme "à plat" sur les lieux de production des produits qu'ils sont destinés à contenir pour les transporter, puis pliés pour leur donner leur forme permettant le transport des produits.

Une fois que les produits ont été distribués, les emballages sont dépliés pour reprendre leur forme "à plat" et éventuellement réutilisés comme décrit ci-dessus, lorsque cela est permis.

De cette façon, d'une part les emballages vides occupent un volume réduit, et d'autre part ils peuvent être utilisés plusieurs fois le cas échéant

Les plaques utilisées pour réaliser de tels emballages sont dans la majorité des cas réalisées dans du carton multicouche ou alvéolaire. Dans ce cas, les moyens de charnière sont simplement obtenus par un pliage du carton. Cependant, les emballages réalisés dans des plaques en carton présentent incontestablement un inconvénient, surtout dans le cas du transport de produits comme des fruits ou des légumes. En effet, il est vrai que ces plaques prédécoupées peuvent être amenées "à plat" sur les lieux de production des produits à transporter, puis pliées pour réaliser les emballages. Cependant, le matériau utilisé est de faible résistance mécanique, empêchant un empilement important des emballages lorsque ces derniers sont en charge des produits à transporter. En outre, les emballages en carton ne présentent pas l'aération nécessaire à une circulation d'air. Enfin, comme les fruits et légumes peuvent produire par exemple du jus lors de leur transport, ces jus tachent et imbibent le carton qui se détériore ainsi rapidement.

Pour pallier cet inconvénient, il a par exemple été réalisé des emballages à partir de boîtes châssis revêtues respectivement de plaques prédécoupées constituées d'un empilage de deux couches l'une sur l'autre, une couche étant constituée d'une feuille en matériau souple comme du papier, carton, plastique, etc., l'autre couche étant constituée d'une feuille de placage de bois. Avec une telle réalisation, les moyens de charnière sont constitués par une découpe appropriée réalisée de la feuille de placage de bois en laissant intacte la feuille en matériau souple. Une telle plaque d'emballage avec la boîte châssis combinées sont par exemple décrites dans le FR-A-2 779 089.

Avec une telle plaque d'emballage, les fruits et légumes pourraient être mis directement en contact avec la feuille de placage de bois, ce qui permet à l'emballage une meilleure conservation pendant sa durée de vie que celle des emballages en carton. Ce type d'emballage présente cependant encore au moins les inconvénients suivants : d'une part le procédé de fabrication de la boîte d'emballage n'est pas compatible avec une production industrielle d'emballages en grande quantité car son coût est trop élevé, et d'autre part la pliure des parties de plaque s'effectuant grâce à la feuille de matériau souple, cette dernière n'est pas à l'abri de chocs ou incidents de toute sorte qui peuvent la détruire relativement facilement.

Aussi, la présente invention a-t-elle pour but de réaliser une plaque prédécoupée pour définir un ensemble de parties de plaque, la plaque étant apte à prendre au moins deux première et seconde formes, la première forme dite "à plat" dans laquelle la plaque se trouve sensiblement dans un plan et la seconde forme dite "pliée" obtenue après pliage autour de moyens de charnière des parties de plaque les unes par_rapport aux autres pour définir un volume creux, par exemple tout ou partie d'un emballage de produits, tout ou partie d'un tiroir de meuble, etc. qui pallie en grande partie les inconvénients des plaques prédécoupées d'emballage ou autre de l'art antérieur notamment tel que décrit ci-dessus.

Plus précisément, la présente invention a pour objet une plaque prédécoupée pour définir un ensemble de parties de plaque, ladite plaque étant apte à prendre au moins deux première et seconde formes, la première forme dite "à plat" dans laquelle ladite plaque se trouve sensiblement dans un plan et la seconde forme dite "pliée" obtenue après pliage autour de moyens de charnière des parties de plaque les unes par rapport aux autres pour définir un volume creux, par exemple tout ou partie d'un emballage de produits, caractérisée par le fait qu'elle est constituée par un empilage d'au moins trois couches les unes sur les autres, respectivement première, deuxième et troisième couches, la deuxième couche située entre la première et la troisième couche étant une couche de matériau souple, au moins la première des deux première et troisième couches étant une couche de matériau relativement rigide.

Selon une caractéristique préférée de l'invention, les moyens de charnières comportent au moins une première rainure réalisée selon une ligne de pliure dans au moins la première des deux première et troisième couches.

Selon une autre caractéristique préférée de l'invention, les moyens de charnières comportent en outre une seconde rainure réalisée selon ladite ligne de pliure dans la troisième couche.

L'invention se rapporte également à un volume ou emballage réalisé à partir d'au moins une plaque prédécoupée selon l'invention, caractérisé en ce qu'il comprend une sangle amovible de maintien en position pliée de ladite au moins une plaque.

L'invention se rapporte également à un procédé de fabrication d'une plaque selon selon l'invention, caractérisé en ce qu'il comprend les étapes suivantes :
- empiler au moins trois couches les unes sur les autres, respectivement première, deuxième et troisième couches, en disposant un moyen de liaison des couches entre elles, la deuxième couche située entre la première et la troisième couches étant une couche de matériau souple, au moins la première des deux première et troisième couches étant une couche relativement rigide,
- presser l'empilage réalisé entre une première et une deuxième matrices, respectivement en contact avec ladite première et troisième couches, ladite première matrice au moins comportant sur sa surface de contact avec la première couche une forme complémentaire mâle de ladite au moins une première rainure réalisée selon une ligne de pliure dans au moins la première des deux première et troisième couches.

Selon une caractéristique avantageuse du procédé selon l'invention, ladite deuxième matrice comporte sur sa surface de contact avec la troisième couche une forme complémentaire mâle de ladite deuxième rainure réalisée selon une ligne de pliure dans la troisième couche.

D'autres caractéristiques et avantages de l'invention apparaîtront au cours de la description suivante donnée en regard des dessins annexés à titre illustratif mais nullement limitatif, dans lesquels :
La figure 1 représente un mode de réalisation d'une plaque d'emballage selon l'invention, dans sa forme dite " à plat ",
La figure 2 représente la plaque selon la figure 1, dans sa forme " pliée " pour former un emballage du type cageot pour le transport des fruits et légumes,
Les figures 3 et 4 représentent une coupe transversale de la plaque selon l'invention, respectivement dans deux modes de réalisation différents,
Les figures 5 et 6 représentent un mode de réalisation des moyens de charnière sur une plaque selon la figure 4, respectivement dans sa forme " à plat " (figure 5) et dans sa forme " pliée " (figure 6), et
La figure 7 représente de façon schématique l'un des éléments entrant dans la constitution de la plaque d'emballage selon l'invention.

Il est précisé que les sept figures représentent différents modes de réalisation de la plaque d'emballage selon l'invention. Cependant, les mêmes références y désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est aussi précisé que, lorsque, selon la définition de l'invention, l'objet de l'invention comporte "au moins un" élément ayant une fonction donnée, le mode de réalisation décrit peut comporter plusieurs de ces éléments.

De même, si le mode de réalisation de l'objet selon l'invention tel qu'illustré comporte plusieurs éléments de fonction identique et si, dans la description, il n'est pas spécifié que l'objet selon cette invention doit obligatoirement comporter un nombre particulier de ces éléments, l'objet de l'invention pourra être défini comme comportant "au moins un" de ces éléments.

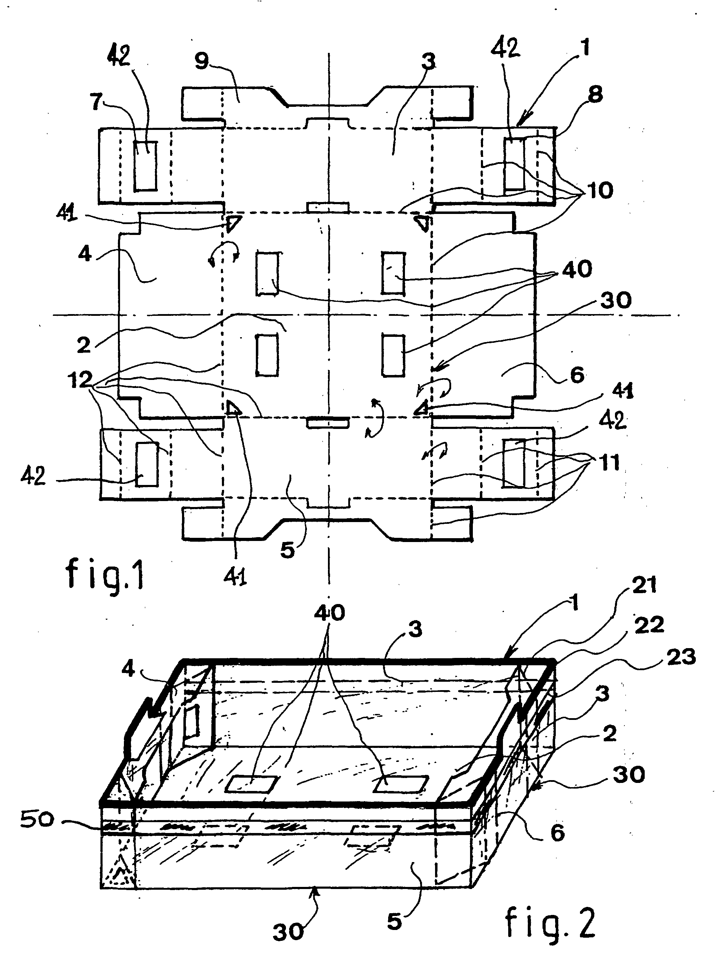

La présente invention concerne une plaque 1 prédécoupée pour définir un ensemble de parties de plaque, la plaque étant apte à prendre au moins deux première et seconde formes, une première forme dite " à plat " (figure 1) et une seconde forme dite " pliée " (figure 2) obtenue après pliage autour de moyens de charnières 30 des parties de plaque les unes par rapport aux autres pour définir un emballage du type cageot ou analogue pour le transport de produits comme des fruits, légumes ou analogues.

Dans le mode de réalisation illustré sur les figures 1 et 2, la plaque 1 comporte un ensemble de parties de plaque, la partie 2 définissant le fond de l'emballage, les parties 3, 4, 5 et 6 en définissant les côtés, d'autres parties 7, 8, 9, etc. constituant des éléments aptes à se rabattre sur les parties de côtés pour former par exemple des renforts de coins, des moyens de préhension, des moyens d'emboîtement, etc..

Pour la compréhension plus particulièrement de la figure 1, les traits interrompus, comme les traits 10, 11, 12, etc., indiquent les lignes de pliure, c'est-à-dire les endroits où les parties de plaque doivent être pliées les unes par rapport aux autres pour former l'emballage du type représenté schématiquement sur la figure 2 destiné à contenir des produits comme des fruits, légumes ou analogues, pour leur transport vers leurs lieux de distribution comme les marchés, les grandes surfaces, les magasins de détail, etc.

Une plaque d'emballage 1 telle que définie ci-dessus se caractérise essentiellement par le fait qu'elle est constituée par un empilage d'au moins trois couches 21, 22, 23 les unes sur les autres, respectivement première 21, deuxième 22 et troisième 23 couches, la deuxième couche située entre la première et la troisième couche étant une couche de matériau souple, au moins la première des deux première et troisième couches étant une couche relativement rigide.

Dans un mode de réalisation avantageux, les trois couches sont collées les unes sur les autres pour former un "lamellé-collé".

La première couche 21 relativement rigide est réalisée dans l'un des matériaux suivants : panneau contre-plaqué de bois, panneau de fibres de bois, feuille de bois, panneau de bois reconstitué, panneau laminé de particules de bois agglomérées avec ou sans liant comme ceux vendus sous la Marque de commerce "Isorel".

La deuxième couche 22 peut être réalisée dans tout matériau souple comme par exemple une feuille de matière plastique ou analogue, de préférence ajourée, suffisamment résistante pour pouvoir subir plusieurs pliages aux mêmes endroits sans se déchirer, se détériorer.

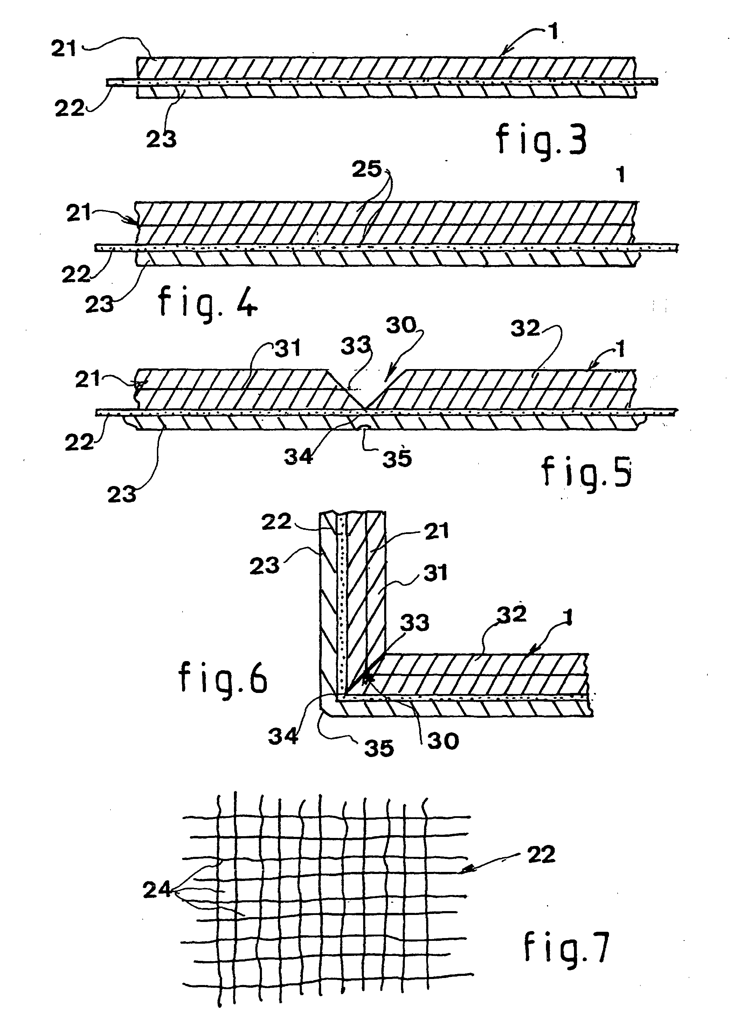

Cependant, quand la première couche 21 est réalisée dans l'un des matériaux spécifiés ci-dessus, il est avantageux que cette deuxième couche 22 soit constituée par au moins l'une des textures suivantes : tresse, fils, treillis, fibres, comme schématiquement illustré sur la figure 7, de façon à former une multitude d'orifices 24 entre ses mailles pour obtenir une aération au moins de la première couche 21 et en conséquence une durée de vie importante.

Quant à la troisième couche 23, elle est avantageusement réalisée dans l'un des matériaux suivants : panneau contre-plaqué de bois, panneau de fibres de bois, feuille de bois, panneau de bois reconstitué, panneau laminé de particules de bois agglomérées avec ou sans liant, papier, carton.

Cette réalisation de la troisième couche 23 est avantageuse pour essentiellement deux raisons.

Quand elle réalisée dans un matériau comme du papier ou carton, cette troisième couche peut comporter des codes et/ou inscriptions de Marque de commerce, provenance, calibrage, etc... Dans ce cas, l'emballage présente à la fois les avantages des cageots réalisés en plaquettes de bois non pliables et des cageots pliables réalisés en carton.

Bien entendu, dans ce cas, c'est la première couche 21 qui est apte à constituer la paroi intérieure de l'emballage formé par la plaque lorsqu'elle est dans sa forme " pliée ", celle qui est contact avec les produits à transporter.

Quand la troisième couche est réalisée dans les autres matériaux mentionnés ci-dessus avec le bois comme matière première, l'emballage est très solide, et présente les avantages d'un cageot ou d'un emballage quelconque réalisée en planchettes de bois, avec en plus celui d'être pliable. Il est donc plus solide, facilement réutilisable quand cela est autorisé, et peut facilement comporter des codes ou inscriptions tel que décrits ci-dessus, imprimés sur la face externe de la découpe dans sa position dite "à plat".

Bien entendu, l'homme de l'art aura compris que la double fonction d'articulation ou de pliage des parties de plaque tout en assurant la liaison entre elles de ces dernières, est permise par la deuxième couche souple, située entre les deux couches rigides, qui reste le seul lien, entre ces parties de plaques, comportant des qualités mécaniques de résistance.

Sur la figure 2, la plaque 1 comporte trois couches 21, 22, 23. Cependant, il est possible, comme représenté sur la figure 4, qu'au moins l'une de ces trois couches, de préférence la première couche 21, soit une couche dite "multicouche" 25, par exemple réalisée dans un panneau de bois contre-plaqué, comme indiqué plus haut

Comme mentionné ci-avant, la plaque d'emballage 1 comporte des moyens de charnière 30 permettant le pliage des parties de plaque 2, 3, 4, ... les unes par rapport aux autres. Les figures 5 et 6 représentent un mode de réalisation de ces moyens de charnière 30 entre les parties de plaque 31, 32 qui peuvent être toutes parties 2, 3, 4, ... définies ci-avant.

Ces moyens de charnière comportent, par préférence, au moins une première rainure 33 réalisée selon une ligne de pliure 34, comme les lignes de pliure 10, 11, 12, ... définies ci-avant, dans au moins la première 21 des deux première 21 et troisième 23 couches. Avantageusement, cette première rainure 33 présente, quand la plaque est dans sa forme "à plat", une section transversale en forme sensiblement de "V". De plus, sa profondeur est au plus égale à l'épaisseur de la première couche 21.

Il est préférable aussi que l'angle du "V" soit sensiblement égal à l'angle de pliure que font entre elles les deux parties de plaque 31, 32 lorsque la plaque 1 est dans sa forme "pliée". Ainsi, lorsque la plaque est destinée à être collée en position pliée, la colle peut être placée dans la rainure en "V" permettant d'obtenir ainsi un emballage renforcé.

Pour favoriser le pliage des deux parties de plaque 31, 32 l'une par rapport à l'autre, en fonction de la nature de la troisième couche 23 et son épaisseur, il peut être avantageux que les moyens de charnière 30 comportent en outre une seconde rainure 35 réalisée dans cette troisième couche, selon la même ligne de pliure 34.

Cette seconde rainure 35 peut être constituée par une simple empreinte lorsque la plaque est dans sa forme "à plat", sans que la profondeur de cette empreinte atteigne la deuxième couche 22 comme représenté sur les figures 5 et 6. L'empreinte peut être obtenue par tout moyen approprié selon le matériau de la couche dans laquelle elle est réalisée, par exemple par simple pression, à froid, ou à chaud au moyen d'une forme complémentaire mâle correspondant au tracé de l'empreinte sur la plaque dans du bois contre-plaqué.

La première rainure 33 peut également être constituée par une simple empreinte lorsque la plaque est dans sa forme "à plat", de préférence obtenue par pressage à chaud si l'épaisseur de la plaque l'exige, au moyen d'une forme complémentaire mâle correspondant au tracé de l'empreinte sur la plaque . Ainsi, de manière avantageuse, la plaque selon l'invention munie de ses rainures 33 et 35 sur les première et troisième couches respectivement, peut être obtenue par une opération de pressage à chaud, entre deux matrices comportant respectivement sur leur surface en contact avec les couches de la plaque les formes complémentaires mâles des rainures à effectuer. Le pressage, à chaud pourra être effectué de préférence à une température de l'ordre de 120° C, et sera possible à froid pour des épaisseurs de plaque inférieures à 2,5 mm en contre plaqué. Le pressage à chaud pour des épaisseurs supérieures à 2,5 mm permet d'assurer un maintien en forme des rainures après le pressage.

Bien entendu, pour assurer une ventilation dans le volume de l'emballage par courants de convection, la plaque comportera au moins une percée 40 réalisée dans une des parties de plaque comme la partie de fond 2.

On notera que les renforts de coins que l'on peut obtenir grâce aux parties de plaque 7 et 8 peuvent être additionnellement utilisés pour une circulation d'air à l'intérieur de ces renforts et dans le volume formé par l'emballage, par des ouvertures appropriées 41, 42 dans les parties de plaque 7, 8, et le fond 2.

Pour maintenir l'emballage en position pliée comme représenté sur la figure 2, et afin de permettre un dépliage ultérieur aisé de cet emballage, l'utilisation d'une sangle 50 amovible placée autour des côtés 3, 4, 5, et 6 en position pliée sera parfaitement appropriée, comme représenté sur la figure 2. Afin d'assurer un bon maintien de la plaque en position pliée, donc une bonne rigidité de l'emballage, la sangle amovible pourra par exemple être constituée d'un matériau du type matière plastique thermorétractable assurant un serrage des parties de plaques entre elles.

Toutefois, il peut être envisagé, par exemple dans le cas où les emballages n'ont pas à être dépliés après qu'ils aient été pliés une première fois, une liaison des parties de plaques pliées entre elles par collage ou agrafage. Dans cas, l'emballage conserve son avantage d'encombrement réduit, du lieu de fabrication de la plaque au lieu de pliage qui peut être réalisé sur le lieu d'utilisation de l'emballage.

Dans la description qui précède, il a été présenté une plaque prédécoupée constituant de manière monobloc la totalité de l'emballage à obtenir. Bien que non représenté, un tel emballage pourra être obtenu à partir d'une pluralité de plaques prédécoupées selon l'invention, distinctes, qui pourront être assemblées entre elles par collage par exemple afin de reconstituer une plaque apte à prendre au moins deux première et seconde formes, la première forme dite "à plat" dans laquelle les plaques se trouvent sensiblement dans un plan et la seconde forme dite "pliée" obtenue après pliage autour de moyens de charnière des parties de plaques les unes par rapport aux autres pour définir un volume creux, par exemple un emballage de produits, un tiroir de meuble, etc.

## Revendications

1. Plaque prédécoupée pour définir un ensemble de parties de plaque, ladite plaque (1) étant apte à prendre au moins deux première et seconde formes, la première forme dite " à plat " dans laquelle ladite plaque dans son ensemble se trouve sensiblement dans un plan et la seconde forme dite " pliée " obtenue après pliage autour de moyens de charnières (30) des parties de plaque (2, 3, 4) les unes par rapport aux autres pour définir un volume creux, par exemple tout ou partie d'un emballage de produits, ***caractérisée par le fait qu***'elle est constituée par un empilage d'au moins trois couches (21, 22, 23) les unes sur les autres, respectivement première, deuxième et troisième couches, la deuxième couche (22) située entre la première (21) et la troisième (23) couche étant une couche de matériau souple, au moins la première des deux première et troisième couches étant une couche relativement rigide, la première couche (21) relativement rigide étant réalisée dans l'un des matériaux suivants : panneau contre-plaqué de bois, panneau de fibres de bois, feuille de bois, panneau de bois reconstitué, panneau laminé de particules de bois agglomérées avec ou sans liant

2. Plaque selon la revendication 1, ***caractérisée par le fait que*** ladite deuxième couche (22) est constituée par au moins l'une des textures suivantes : tresse, fils, treillis, fibres.

3. Plaque selon la revendication 1 ou 2, ***caractérisée par le fait que*** la troisième couche (23) est réalisée dans l'un des matériaux suivants : panneau contre-plaqué de bois, panneau de fibres de bois, feuille de bois, panneau de bois reconstitué, panneau laminé de particules de bois agglomérées avec ou sans liant, papier, carton.

4. Plaque selon l'une des revendications précédentes, ***caractérisée par le fait que*** les moyens de charnières (30) comportent au moins une première rainure (33) réalisée selon une ligne de. pliure (34) dans au moins la première (21) des deux première et troisième couches.

5. Plaque selon la revendication 4, ***caractérisé par le fait que*** la première rainure (33) présente une section transversale en forme sensiblement de "V".

6. Plaque selon l'une des revendications 4 et 5, **caractérisée par le fait que**- la profondeur de la première rainure est au plus égale à l'épaisseur de la première couche.

7. Plaque selon l'une des revendications 5 et 6, ***caracrérisée par le fait que*** l'angle du "V" est sensiblement égal à l'angle de pliure que font entre elles les deux parties de plaque (31, 32) lorsque la plaque est dans sa forme pliée.

8. Plaque selon l'une des revendications 4 à 7, ***caractérisée par le fait que*** les moyens de charnières (30) comportent en outre une seconde rainure (35) réalisée selon ladite ligne de pliure (34) dans la troisième couche (23).

9. Plaque selon l'une des revendications précédentes, ***carartérisée par le fait qu***'elle comporte au moins une percée (40) réalisée dans au moins l'une (2) des parties de plaque, pour assurer une ventilation dans le volume dudit emballage par courants de convection.

10. Plaque selon l'une des revendications précédentes, ***caractérisée par le fait que*** lesdites trois couches (21, 22, 23) sont collées les unes sur les autres pour former un "lamellé-collé".

11. Plaque selon l'une des revendications précédentes, ***caractérisée par le fait que*** la première couche est une couche "multicouche".

12. Plaque selon l'une des revendications précédentes, ***caractérisée par le fait que*** ladite première couche (21) est apte à constituer la paroi intérieure dudit emballage formé par ladite plaque (1) lorsqu'elle est dans sa forme " pliée ".

13. Emballage ou volume réalisé à partir d'au moins une plaque prédécoupée selon l'une des revendications précédentes, ***caractérisé en ce qu***'il comprend une sangle (50) amovible de maintien en position pliée de ladite au moins une plaque.

14. Procédé de fabrication d'une plaque selon l'une des revendications 4 à 12, ***caractérisé en ce qu***'il comprend les étapes suivantes :
- empiler au moins trois couches (21, 22, 23) les unes sur les autres, respectivement première, deuxième et troisième couches, en disposant un moyen de liaison des couches entre elles, la deuxième couche (22) située entre la première (21) et la troisième (23) couches étant une couche de matériau souple, au moins la première des deux première et troisième couches étant une couche relativement rigide,
- presser l'empilage réalisé entre une première et une deuxième matrices, respectivement en contact avec ladite première et troisième couches, ladite première matrice au moins comportant sur sa surface de contact avec la première couche une forme complémentaire mâle de ladite au moins une première rainure (33) réalisée selon une ligne de pliure (34) dans au moins la première (21) des deux première et troisième couches.

15. Procédé de fabrication selon la revendication pour la fabrication d'une plaque selon la revendication 8, ***caractérisé en ce que*** ladite deuxième matrice comporte sur sa surface de contact avec la troisième couche une forme complémentaire mâle de ladite deuxième rainure (35) réalisée selon une ligne de pliure (34) dans la troisième couche (23).

16. Procédé de fabrication selon la revendication 14 ou 15, ***caractérisé en ce que*** le pressage est réalisé à chaud.

## Claims

1. Sheet, which has been previously cut-out to define an assembly of sheet parts, said sheet (1) being capable of assuming at least two first and second configurations, the first configuration called "flat", in which said sheet in its assembly is substantially in one plane, and the second configuration called "folded", obtained after folding, around hinge means (30), sheet parts (2, 3, 4) relative to one another to define a hollow volume, for example all or part of packaging for products, **characterised in that** said sheet is formed by stacking at least three layers (21, 22, 23) on top of one another, respectively first, second and third layers, the second layer (22), situated between the first layer (21) and the third layer (23), being a layer of flexible material, and at least the first of the two first and third layers being a relatively rigid layer, the first relatively rigid layer (21) being produced in one of the following materials: plywood board, wood fibre board, wood sheet, reconstituted wood board, laminated board of wood particles agglomerated with or without a bonding agent.

2. Sheet according to claim 1, **characterised in that** said second layer (22) is formed by at least one of the following textures; plait, threads, lattice, fibres.

3. Sheet according to one of claims 1 and 2, **characterised in that** the third layer (23) is produced in one of the following materials: plywood board, wood fibre board, wood sheet, reconstituted wood board, laminated board of wood particles agglomerated with or without a bonding agent, paper, cardboard.

4. Sheet according to one of the preceding claims, **characterised in that** the hinge means (30) comprise at least one first groove (33) provided along a fold line (34) in at least the first (21) of the two first and third layers.

5. Sheet according to claim 5, **characterised in that** the first groove (33) has a substantially "V" shaped cross-section.

6. Sheet according to one of claims 5 and 6, **characterised in that** the depth of the first groove is, at the most, equal to the thickness of the first layer.

7. Sheet according to one of claims 6 and 7, **characterised in that** the angle of the "V" is substantially equal to the fold angle which the two sheet parts (31, 32) form between each other when the sheet is in its folded configuration.

8. Sheet according to one of claims 5 to 8, **characterised in that** the hinge means (30) also comprise a second groove (35) provided along said fold line (34) in the third layer (23).

9. Sheet according to one of the preceding claims, **characterised in that** it comprises at least one opening (40), provided in at least one (2) of the sheet parts, to ensure ventilation in the volume of said packaging by convention currents.

10. Sheet according to one of the preceding claims, **characterised in that** said three layers (21, 22, 23) are glued onto one another to form a "glued laminate".

11. Sheet according to one of the preceding claims, **characterised in that** the first layer is a "multi-layer" layer.

12. Sheet according to one of the preceding claims, **characterised in that** said first layer (21) is capable of forming the internal wall of said packaging formed by said sheet (1) when it is in its "folded" configuration.

13. Packaging or volume produced from at least one previously cut-out sheet according to one of the preceding claims, **characterised in that** it comprises a detachable strap (50) for maintaining said at least one sheet in the folded position.

14. Method of manufacturing a sheet according to one of claims 4 to 12, **characterised in that** it comprises the following steps:
- stacking at least three layers (21, 22, 23) on top of one another, respectively first, second and third layers, whilst providing therebetween a means for connecting the layers, the second layer (22), situated between the first layer (21) and the third layer (23), being a layer of flexible material, and at least the first of the two first and third layers being a relatively rigid layer, and
- pressing the stacked mass, thus produced, between a first matrix and a second matrix, respectively in contact with said first and third layers, said first matrix at least comprising, on its contact surface with the first layer, a complementary male configuration of said at least one first groove (33), which is provided along a fold line (34) in at least the first layer (21) of the two first and third layers.

15. Manufacturing method according to the claim for manufacturing a sheet according to claim 9, **characterised in that** said second matrix comprises, on its contact surface with the third layer, a complementary male configuration of said second groove (35), which is provided along a fold line (34) in the third layer (23).

16. Manufacturing method according to claim 15 or 16, **characterised in that** the pressing is carried out in the hot.

## Patentansprüche

1. Vorgeschnittene Platte zum Definieren einer Einheit von Plattenteilen, wobei die Platte (1) mindestens zwei erste und zweite Formen aufweist, wobei die erste Form, die so genannte "flache" Form, bei der die Platte sich insgesamt im Wesentlichen in einer Ebene befindet, und die zweite Form, die so genannte "gefaltete" Form, die nach Falten der Plattenteile (2, 3, 4) zueinander um Scharniermittel (30) erzielt wird, um ein Hohlvolumen zu definieren, zum Beispiel einen Teil einer oder eine ganze Produktverpackung, **dadurch gekennzeichnet, dass** sie aus mindestens drei aufeinandergestapelten Schichten (21, 22, 23) besteht, und zwar jeweils eine erste, zweite und dritte Schicht, wobei die zweite zwischen der ersten (21) und der dritten (23) Schicht liegende Schicht (22) eine Schicht aus biegsamem Werkstoff ist, wobei mindestens die erste Schicht der beiden Schichten eins und drei eine relativ starre Schicht ist, wobei die erste relativ starre Schicht (21) aus einem der folgenden Werkstoffe hergestellt wird: Sperrholzplatte, Holzfaserplatte, Holzblatt, Kunstholzplatte, Pressspanplatte mit oder ohne Bindemittel.

2. Platte nach Anspruch 1, **dadurch gekennzeichnet, dass** die zweite Schicht (22) aus mindestens einer der folgenden Texturen besteht: Flechte, Fäden, Geflecht, Fasern.

3. Platte nach Anspruch 1 oder 2, **dadurch gekennzeichnet, dass** die dritte Schicht (23) aus einem der folgenden Werkstoffe hergestellt ist: Sperrholzplatte, Holzfaserplatte, Holzblatt, Kunstholzplatte, Pressspanplatte mit oder ohne Bindemittel, Papier, Pappe.

4. Platte nach einem der vorhergehenden Ansprüche, **dadurch gekennzeichnet, dass** die Scharniermittel (30) mindestens eine erste Nut (33) entlang einer Faltlinie (34) in mindestens der ersten Schicht (21) der beiden Schichten eins und drei umfasst.

5. Platte nach Anspruch 4, **dadurch gekennzeichnet, dass** die erste Nut (33) einen im Wesentlichen V-förmigen Querschnitt aufweist.

6. Platte nach Anspruch 4 und 5, **dadurch gekennzeichnet, dass** die Tiefe der ersten Nut maximal gleich der Stärke der ersten Schicht ist.

7. Platte nach Anspruch 5 und 6, **dadurch gekennzeichnet, dass** der V-Winkel im Wesentlichen gleich dem Faltwinkel ist, den die zwei Plattenteile (31, 32) untereinander bilden, wenn sich die Platte in ihrer gefalteten Form befindet.

8. Platte nach Anspruch 4 bis 7, **dadurch gekennzeichnet, dass** die Scharniermittel (30) ferner eine zweite Nut (35) entlang der Faltlinie (34) in dieser dritten Schicht (23) umfassen.

9. Platte nach einem der vorhergehenden Ansprüche, **dadurch gekennzeichnet, dass** sie mindestens eine Durchbohrung (40) in mindestens einem (2) der Plattenteile umfasst, um eine Belüftung im Volumen der Verpackung durch Konvektionsströmungen sicherzustellen.

10. Platte nach einem der vorhergehenden Ansprüche, **dadurch gekennzeichnet, dass** die drei Schichten (21, 22, 23) aufeinander geklebt sind, um einen "verleimten Schichtstoff" zu bilden.

11. Platte nach einem der vorhergehenden Ansprüche, **dadurch gekennzeichnet, dass** die erste Schicht eine "Multischicht" ist.

12. Platte nach einem der vorhergehenden Ansprüche, **dadurch gekennzeichnet, dass** die erste Schicht (21) die Innenwand der aus der Platte (1) gebildeten Verpackung bildet, wenn sie sich in ihrer "gefalteten" Stellung befindet.

13. Verpackung oder Volumen aus mindestens einer vorgeschnittenen Platte nach einem der vorhergehenden Ansprüche, **dadurch gekennzeichnet, dass** sie bzw. es einen abnehmbaren Gurt (50) zum Halten der mindestens einen Platte in gefalteter Stellung umfasst.

14. Herstellungsverfahren einer Platte nach einem der Ansprüche 4 bis 12, **dadurch gekennzeichnet, dass** es die folgenden Schritte umfasst:
- Aufeinanderstapeln von mindestens drei Schichten (21, 22, 23) d.h. erste, zweite und dritte Schichten, indem zwischen den Schichten ein Verbindungsmittel der Schichten angeordnet wird, wobei die zwischen der ersten (21) und der dritten (23) Schicht liegende zweite Schicht (22) eine Schicht aus biegsamem Werkstoff ist, wobei mindestens die erste der beiden Schichten eins und drei eine relativ starre Schicht ist,
- Pressen des hergestellten Stapels zwischen einem ersten und einem zweiten Gesenk, jeweils in Berührung mit der ersten und der dritten Schicht, wobei das erste Gesenk mindestens auf seiner Berührungsfläche mit der ersten Schicht eine zu mindestens einer ersten Nut (33) komplementäre Reliefform umfasst, wobei die erste Nut entlang einer Faltlinie (34) in mindestens der ersten (21) der beiden Schichten eins und drei hergestellt ist.

15. Herstellungsverfahren nach dem Anspruch zum Herstellen einer Platte nach Anspruch 8, **dadurch gekennzeichnet, dass** das zweite Gesenk auf seiner Fläche in Berührung mit der dritten Schicht eine zur zweiten Nut (35) komplementäre Reliefform entlang einer Faltlinie (34) in der dritten Schicht (23) umfasst.

16. Herstellungsverfahren nach Anspruch 14 oder 15, **dadurch gekennzeichnet, dass** das Pressen warm erfolgt.
